# FASCICULE DE BREVET EUROPEEN

(11) **EP 4 043 341 B1**
(45) Date de publication et mention de la délivrance du brevet: **06.03.2024**
(21) Numéro de dépôt: 22153627.9
(22) Date de dépôt: 27.01.2022
(51) Int. Cl.: B64C 13/04, B64C 13/18, B64C 27/57

(54) **SYSTEME DE COMMANDE D'UN AERONEF ET AERONEF ASSOCIE**
STEUERUNGSSYSTEM EINES LUFTFAHRZEUGS UND ZUGEHÖRIGES LUFTFAHRZEUG
AIRCRAFT CONTROL SYSTEM AND ASSOCIATED AIRCRAFT

(30) Priorité: 10.02.2021 FR 2101253
(43) Date de publication de la demande: 17.08.2022
(73) Titulaire: Airbus Helicopters, 13725 Marignane Cedex (FR)
(72) Inventeur: QUEIRAS, Nicolas, 13170 LES PENNES MIRABEAU (FR); HELLIO, Patrick, 13320 BOUC BEL AIR (FR)
(74) Mandataire: GPI Brevets

(56) Documents cités:
- EP-A1- 2 927 784
- EP-A1- 3 366 575
- FR-A1- 3 097 527
- US-A1- 2014 027 565
- US-A1- 2015 375 850
- US-A1- 2020 079 507
- US-B2- 10 683 100

## Description

La présente invention concerne un système de commande pour un aéronef.

L'invention vise plus particulièrement un système de commande permettant de faciliter le pilotage d'un aéronef tel que par exemple un aéronef à voilure fixe ou un aéronef à voilure tournante, un hélicoptère notamment.

Généralement, un pilote d'aéronef utilise plusieurs organes de commande disjoints tels que par exemple des leviers, des manches, des pédales ou des volants pour piloter l'aéronef suivant plusieurs axes. Plusieurs organes disjoints indépendants les uns des autres permettent notamment de piloter l'aéronef suivant quatre axes de commande présentant un axe de commande de tangage, un axe de commande de roulis, un axe de commande de mouvement de lacet et un axe de commande de sustentation.

En outre selon un premier exemple et notamment lorsque l'aéronef est un hélicoptère, un tel axe de commande de sustentation peut permettre par exemple de modifier une altitude de l'aéronef par rapport au niveau de la mer ou au contraire de maintenir constante cette altitude.

Selon un second exemple et notamment lorsque l'aéronef est un avion, un tel axe de commande de sustentation peut également permettre de modifier une poussée et donc une vitesse de déplacement de l'aéronef par rapport au sol.

On connait également, tels que décrits dans le document FR 2 479 133, des systèmes de commandes, permettant de commander des moyens aérodynamiques d'un aéronef, à commandes de vol désaccouplées mécaniquement. De tels système de commande sont parfois dénommés « fly by wire » en langue anglaise et permettent alors notamment d'améliorer l'ergonomie d'un cockpit et d'offrir une meilleure visibilité en supprimant dans le cockpit certaines pièces de liaison mécanique telles que notamment des tiges, des tringles ou des câbles. En outre, ce document décrit un unique levier de commande pouvant être manoeuvré par un pilote. Le levier de commande est ainsi mobile selon une liaison de type linéaire annulaire et présente alors trois degrés de liberté en rotation et un degré de liberté en translation par rapport à un siège de l'aéronef sur lequel le pilote est assis. Plusieurs mouvements sont possibles à savoir un mouvement vertical vers le haut et vers le bas, un mouvement longitudinal vers l'avant et vers l'arrière, un mouvement latéral vers la droite et vers la gauche ainsi qu'un mouvement de rotation autour d'un axe de rotation agencé sensiblement verticalement.

Des systèmes à retours de forces agissent sur le levier de commande pour contrer les différents mouvements du levier de commande et permettre de le replacer dans une position centrale de repos.

Cependant, la manoeuvre du levier de commande peut nécessiter une formation particulière et une qualification du pilote pour ce type d'aéronef.

De plus, les mouvements longitudinaux et latéraux du levier de commande peuvent requérir une force de manipulation relativement importante pour le pilote. Un tel système de commande peut ainsi générer par son utilisation prolongée des efforts répétés sources de fatigue pour le pilote.

Le document EP 2 759 473 décrit un organe de commande muni d'un levier de pas collectif pour piloter un aéronef selon un axe de commande de sustentation et d'une poignée pour piloter l'aéronef selon un axe de commande de mouvement de lacet.

Ainsi, un tel organe de commande permet alors de regrouper les commandes de l'aéronef selon uniquement deux axes de commande. Un tel organe de commande doit être par conséquent combiné avec par exemple un manche ou mini-manche de pas cyclique pour piloter l'aéronef selon un axe de commande de tangage et un axe de commande de roulis.

Tels que décrits dans le document FR 3 038 294, on connait également des systèmes de commande comportant deux organes de commandes disjoints destinés à être actionnés respectivement par un pilote et un copilote. De tels organes de commande comportent deux mini-manches qui permettent un contrôle notamment en tangage et en roulis de l'aéronef.

Cependant ces organes de commande doivent être associés à d'autres organes de commande permettant par exemple de réaliser un contrôle des mouvements de lacet et un contrôle de la sustentation de l'aéronef.

Le document US10683100 décrit quant à lui un système de commande pour un aéronef présentant un bouton 208 configuré pour commander les déplacements de l'aéronef au sol ou dans les airs. Le bouton 208 est alors mobile par rapport à un accoudoir droit d'un siège. Quatre degrés de mobilité du bouton 208 sont alors décrits, à savoir d'une part trois translations selon trois axes orthogonaux, deux axes étant agencés de manière horizontale et définissant un plan et un axe vertical, et d'autre part une rotation selon l'axe vertical.

Par ailleurs, il est indiqué que le bouton 208 peut permettre de diriger l'aéronef dans toutes les directions et donc selon six degrés de mobilité rapport au sol.

Néanmoins, le bouton 208 forme une poignée mobile par rapport à un support lié à l'aéronef.

Les déplacements de ce bouton 208 nécessitent l'utilisation d'au moins deux doigts et obligent le pilote à effectuer des mouvements de rotation de son poignet, de son avant-bras, de son bras, voire de son épaule.

Le document US 2014/027565 décrit quant à lui une poignée 18 prolongeant un manche 14 permettant de commander cycliquement le pas des pales d'un rotor d'hélicoptère. Un tel manche 14 est alors mobile en rotation suivant au moins deux axes de rotation par rapport à un support lié à l'aéronef.

Cette poignée 18 peut notamment comporter un commutateur 450 permettant d'engager/de désengager un pilote automatique.

Le document EP 3 366575 concerne quant à lui un système de pilotage électrique pour un giravion comprenant un dispositif informatique générant des lois de commande.

Ces lois de commande peuvent permettre d'engager une commande de mouvement de roulis ou de lacet au moyen d'un commutateur 402 d'un ensemble de commande pilote. L'angle de roulis pour la commande de roulis (ou le taux de lacet pour la commande de lacet) est déterminé en fonction d'une vitesse d'avancement du giravion. Le commutateur 402 peut être disposé sur une poignée 264a d'un levier de commande de pas collectif. Le commutateur 402 est par ailleurs de type « Bip ».

Les documents US 2015/375850, FR 3 097527, EP 2 927784 et US 2020/079507 décrivent quant à eux d'autres réalisations présentant différents boutons de commande montés sur une poignée de manche de pas cyclique, voire sur une plaque solidaire d'une planche de bord.

La présente invention a alors pour objet de proposer un système de commande alternatif permettant de s'affranchir des limitations mentionnées ci-dessus.

En outre, un objectif de l'invention est de fournir un système de commande dont l'utilisation est intuitive et présentant un organe de commande simple d'utilisation et aisément manoeuvrable.

L'invention se rapporte donc à un système de commande pour un aéronef, le système de commande étant configuré pour permettre à un pilote de l'aéronef de commander des moyens aérodynamiques d'un aéronef, le système de commande comportant une unité de traitement pour générer des ordres de commande, les ordres de commande étant transmis à des dispositifs de commande pour modifier une position des moyens aérodynamiques et pour piloter l'aéronef selon quatre axes de commande présentant un axe de commande de tangage, un axe de commande de roulis, un axe de commande de mouvement de lacet et un axe de commande de sustentation, le système de commande comportant un organe de commande générant des consignes de commande, les consignes de commande étant transmises à l'unité de traitement générant les ordres de commande sous la dépendance des consignes de commande, l'organe de commande étant désaccouplé mécaniquement des dispositifs de commande.

Selon l'invention, un tel système de commande est remarquable en ce que l'organe de commande comporte au moins :
- une interface de commande multidirectionnelle générant des consignes de commande pour piloter l'aéronef d'une part selon un premier axe de commande et d'autre part selon un deuxième axe de commande distinct du premier axe de commande, le premier axe de commande et le deuxième de commande étant choisis parmi les quatre axes de commande,
- un premier bouton de commande bidirectionnelle générant des consignes de commande pour piloter l'aéronef selon un troisième axe de commande distinct du premier axe de commande et du deuxième axe de commande, le troisième axe de commande étant choisi parmi les quatre axes, et
- un second bouton de commande bidirectionnelle générant des consignes de commande pour piloter l'aéronef selon un quatrième axe de commande distinct du premier axe de commande, du deuxième axe de commande et du troisième axe de commande, le quatrième axe de commande étant choisi parmi les quatre axes, et
- une poignée configurée pour être saisie par une main du pilote, l'interface de commande multidirectionnelle, le premier bouton de commande bidirectionnelle et le second bouton de commande bidirectionnelle étant agencés sur une première extrémité de la poignée, l'interface de commande multidirectionnelle, le premier bouton de commande bidirectionnelle et le second bouton de commande bidirectionnelle étant configurés pour être actionnés par au moins un doigt de la main du pilote, la poignée comportant une seconde extrémité configurée pour être solidarisée selon une liaison de type encastrement à zéro degré de liberté avec un support de l'aéronef.

Autrement dit, l'interface de commande multidirectionnelle, le premier bouton de commande bidirectionnelle et le second bouton de commande bidirectionnelle sont portés par un même organe de commande. En outre, le premier bouton de commande bidirectionnelle et le second bouton de commande bidirectionnelle sont respectivements disjoints de l'interface de commande multidirectionnelle. De préférence, l'interface de commande multidirectionnelle, le premier bouton de commande bidirectionnelle et le second bouton de commande bidirectionnelle peuvent être juxtaposés les uns à côtés des autres sur une face extérieure de la poignée.

De plus, l'interface de commande multidirectionnelle, le premier bouton de commande bidirectionnelle et le second bouton de commande bidirectionnelle sont rapportés sur la face extérieure de la poignée et ne forment donc pas un ensemble monolithique avec la poignée qui les reçoit.

Ainsi, une telle poignée qui est prise en main par un pilote ou un copilote ne peut pas être déplacée en translation ou en rotation par rapport au support de l'aéronef. L'interface de commande multidirectionnelle, le premier bouton de commande bidirectionnelle et le second bouton de commande bidirectionnelle peuvent ainsi être actionnés uniquement à la force d'un ou plusieurs doigts et ne requièrent pas de déplacer la main, le poignet, l'avant bras, le bras ou encore l'épaule par rapport au support de l'aéronef.

L'organe de commande comporte ainsi une interface de commande multidirectionnelle, un premier bouton de commande bidirectionnelle et un second bouton de commande bidirectionnelle pour piloter un aéronef selon les quatre axes de commande sans aucun couplage ergonomique entre eux.

Le pilotage de l'aéronef au moyen d'un tel système de commande est ainsi plus simple à effectuer et nécessite des gestes d'un ou deux doigts de faible amplitude et avec une coordination limitée des mouvements du pilote.

Le pilote peut ainsi piloter l'aéronef en n'effectuant aucun déplacement ou mouvement de l'organe de commande. Le pilote n'a donc pas d'effort à exercer sur un levier de commande pour le déplacer et pour éventuellement contrer des forces de rappel avec sa main, son poignet, son avant bras, son bras ou encore son épaule. Selon l'invention, le pilote actionne uniquement l'interface de commande multidirectionnelle, le premier bouton de commande bidirectionnelle et le second bouton de commande bidirectionnelle pour piloter l'aéronef selon les quatre axes. En outre, l'interface de commande multidirectionnelle peut comporter une bille, une boule, une dalle ou un pavé tactile, une croix directionnelle, un stick analogique ou encore un bouton en forme de chapeau chinois par exemple.

Une telle interface de commande multidirectionnelle peut dès lors être actionnée par la paume d'une main ou par un ou plusieurs doigts d'une main du pilote.

Eventuellement, un pilote de l'aéronef peut piloter l'aéronef selon les quatre axes de commande uniquement à l'aide de l'un de ses doigts d'une main, par exemple le pouce de sa main droite. Dans ce cas, l'interface de commande multidirectionnelle, le premier bouton de commande bidirectionnelle et le second bouton de commande bidirectionnelle ne peuvent pas être actionnés simultanément et sont actionnés individuellement l'un après l'autre par un même doigt du pilote ou du copilote. Par exemple, l'interface de commande multidirectionnelle, le premier bouton de commande bidirectionnelle et le second bouton de commande bidirectionnelle sont actionnés en effectuant des contacts de types impulsionnels puis en revenant ensuite automatiquement dans une position centrale de repos. Des moyens de retour de force ou de rappel peuvent donc être utilisés pour replacer l'interface de commande multidirectionnelle, le premier bouton de commande bidirectionnelle et le second bouton de commande bidirectionnelle dans leur position centrale respective.

De plus, selon l'emplacement choisi des boutons de commandes multidirectionnelles et bidirectionnelles sur l'interface de commande, un pilote de l'aéronef peut piloter aussi l'aéronef selon les quatre axes de commande simultanément à l'aide de plusieurs de ses doigts d'une main, par exemple le pouce, l'index et le majeur de sa main droite. Dans ce cas, le bouton de commande multidirectionnelle est actionné par le pouce, le premier bouton de commande bidirectionnelle est actionné par l'index et le second bouton de commande bidirectionnelle peut être actionné par le majeur, le tout simultanément, en effectuant des contacts de types impulsionnels puis en revenant ensuite automatiquement dans une position centrale de repos.

En outre, l'unité de traitement peut comprendre par exemple au moins un processeur et au moins une mémoire, au moins un circuit intégré, au moins un système programmable, au moins un circuit logique, ces exemples ne limitant pas la portée donnée à l'expression « unité de traitement ». Le terme processeur peut désigner aussi bien une unité centrale de traitement connue sous l'acronyme CPU, une unité graphique de traitement GPU, une unité digitale connue sous l'acronyme DSP, un microcontrôleur...

Une telle unité de traitement peut être reliée par voie filaire ou non filaire à l'interface de commande multidirectionnelle pour recevoir par exemple les consignes de commande de tangage et de roulis. Ces consignes de commande sont alors traitées par l'unité de traitement qui génère en sortie les ordres de commande. De tels ordres de commande peuvent varier sous la dépendance d'autres paramètres d'entrée tels que par exemple la vitesse de déplacement de l'aéronef.

Ainsi, lorsque la vitesse de déplacement est inférieure à un seuil de vitesse prédéterminé, l'interface de commande multidirectionnelle peut, via un traitement effectué par l'unité de traitement, permettre au pilote de modifier par exemple une référence ou un objectif de vitesse de déplacement par rapport au sol selon une direction longitudinale et une direction latérale. Ces directions longitudinale et latérale peuvent être avantageusement choisies perpendiculaires entre elles et permettent alors de définir avec une direction verticale liée à la force de pesanteur un repère orthonormé terrestre.

Alternativement, lorsque la vitesse de déplacement est supérieure à ce seuil de vitesse prédéterminé, l'interface de commande multidirectionnelle et l'unité de traitement peuvent permettre au pilote de modifier par exemple une référence ou un objectif de vitesse de déplacement par rapport à l'air et/ou éventuellement selon des directions longitudinale et latérale.

De même, le premier bouton de commande bidirectionnelle et/ou le second bouton de commande bidirectionnelle peuvent comporter une molette, une croix directionnelle, un stick analogique ou encore un bouton en forme de chapeau chinois par exemple.

Selon un exemple de réalisation, le premier bouton de commande bidirectionnelle peut être manipulé par un pilote selon une direction gauche orientée vers un côté gauche de l'aéronef et selon une direction droite orientée vers un côté droit de l'aéronef. Les côtés gauche et droit sont en outre définis par rapport à une direction antéropostérieure inscrite dans un plan antéropostérieur s'étendant depuis une queue de l'aéronef vers un nez de l'aéronef.

Par ailleurs, le second bouton de commande bidirectionnelle peut être manipulé par le pilote selon une direction haute orientée vers un côté supérieur ou avant de l'aéronef et selon une direction basse orientée vers un côté inférieur ou arrière de l'aéronef.

En outre, le premier bouton de commande bidirectionnelle et le second bouton de commande bidirectionnelle sont également reliés par voie filaire ou non filaire à l'unité de traitement de manière à traiter les consignes de commande ainsi générées et piloter l'aéronef différemment en fonction de la vitesse de déplacement de l'aéronef.

Ainsi, lorsque la vitesse de déplacement est inférieure à un seuil de vitesse prédéterminé, le second bouton de commande bidirectionnelle peut permettre au pilote de modifier par exemple une référence ou un objectif de vitesse de déplacement selon la direction verticale du référentiel terrestre.

Alternativement, lorsque la vitesse de déplacement est supérieure à ce seuil de vitesse prédéterminé, le second bouton de commande bidirectionnelle peut permettre au pilote de modifier par exemple une référence ou un objectif de pente de la trajectoire courante de l'aéronef.

Par ailleurs, quelle que soit la vitesse de déplacement de l'aéronef, le premier bouton de commande bidirectionnelle peut permettre au pilote de modifier par exemple une référence de cap ou un objectif de vitesse angulaire en lacet de l'aéronef.

Selon un exemple de réalisation de l'invention, le premier axe de commande peut être l'axe de commande de tangage, le deuxième axe de commande peut être l'axe de commande de roulis, le troisième axe de commande peut être l'axe de commande de lacet et le quatrième axe de commande peut être l'axe de commande de sustentation.

Avantageusement, le premier bouton de commande bidirectionnelle et le second bouton de commande bidirectionnelle peuvent être regroupés et former un bouton de commande multidirectionnelle.

Dans ce cas, le bouton de commande multidirectionnelle peut comporter, à l'instar de l'interface de commande multidirectionnelle, une bille, une boule, une dalle ou un pavé tactile, une croix directionnelle, un stick analogique ou encore un bouton en forme de chapeau chinois par exemple.

Dans ce cas, un tel bouton de commande multidirectionnelle peut permettre au pilote de piloter l'aéronef selon les quatre axes de commande simultanément à l'aide de deux de ses doigts d'une main, par exemple le pouce et l'index de sa main droite.

En outre, plusieurs variantes de réalisation de l'invention sont envisagées en fonction de l'implantation de la poignée dans le cockpit de l'aéronef.

Selon une autre variante de l'invention compatible avec les précédentes variantes, l'organe de commande peut comporter au moins un interrupteur monostable actionnable entre une position de repos et une position activée générant une consigne de commande de sélection.

Une telle consigne de commande de sélection est alors transmise par voie filaire ou non filaire à l'unité de traitement pour sélectionner par exemple au moins un mode de pilotage automatique et de manière générale pour modifier en conséquence des ordres de commande en sortie de l'unité de traitement.

En outre, l'organe de commande peut avantageusement comporter un ou plusieurs des interrupteurs monostables décrits par la suite individuellement pour plus de clarté.

Selon un premier exemple, la consigne de commande de sélection générée par le au moins un interrupteur monostable peut permettre de sélectionner un premier mode de pilotage automatique dit « mode approche », le mode approche étant mis en oeuvre par l'unité de traitement en générant des ordres de commande pour piloter automatiquement l'aéronef selon une trajectoire de descente prédéterminée vers une zone d'atterrissage.

En outre dans un tel mode approche, l'unité de traitement peut également générer des ordres de commande variant en fonction d'autres paramètres tels que par exemple la vitesse de déplacement de l'aéronef.

Ainsi, lorsque la vitesse de déplacement est inférieure à un seuil de vitesse prédéterminé, ce mode approche peut permettre au pilote de pré-positionner par défaut, indépendamment de la position des boutons de commandes multidirectionnels ou bidirectionnels, une référence ou un objectif de vitesse de déplacement selon la direction verticale du référentiel terrestre. Un tel objectif de vitesse peut être par exemple de 500 pieds par minute (ft/min) ou de 152,4 mètres par minute (m/min).

Alternativement, lorsque la vitesse de déplacement est supérieure à ce seuil de vitesse prédéterminé, le mode approche peut permettre au pilote de pré-positionner par défaut par exemple une référence ou un objectif de pente de l'aéronef. Un tel objectif de pente peut être par exemple égal à -4 degrés.

Avantageusement, le premier bouton de commande bidirectionnelle et le second bouton de commande bidirectionnelle pouvant former un bouton de commande multidirectionnelle, le au moins un interrupteur monostable peut être formé par le bouton de commande multidirectionnelle, la consigne de commande de sélection étant générée lorsque le pilote exerce un effort de pression sur le bouton de commande multidirectionnelle.

Autrement dit, le bouton de commande multidirectionnelle est multifonction permettant à un pilote de piloter l'aéronef selon l'axe de commande de mouvement de lacet, selon l'axe de commande de sustentation et de commander la sélection du mode approche lorsqu'il souhaite réaliser une phase d'atterrissage.

Selon un deuxième exemple, la consigne de commande de sélection générée par le au moins un interrupteur monostable peut permettre de sélectionner un mode de pilotage automatique dit « mode stationnaire », le mode stationnaire étant mis en oeuvre par l'unité de traitement en générant des ordres de commande pour commander automatiquement une réduction de vitesse de déplacement de l'aéronef.

En outre dans un tel mode stationnaire, l'unité de traitement peut également générer des ordres de commande variant en fonction d'autres paramètres tels que par exemple la vitesse de déplacement de l'aéronef.

Ainsi, lorsque la vitesse de déplacement est inférieure à un seuil de vitesse prédéterminé, le mode stationnaire peut permettre au pilote de sélectionner une vitesse de déplacement nulle de l'aéronef par rapport au sol.

Alternativement, lorsque la vitesse de déplacement est supérieure à ce seuil de vitesse prédéterminé, le mode stationnaire peut permettre au pilote de réduire la vitesse de déplacement de l'aéronef jusqu'à un autre seuil de vitesse prédéterminé qui peut être par exemple une vitesse optimale de montée pour l'aéronef.

Selon un troisième exemple, la consigne de commande de sélection générée par le au moins un interrupteur monostable peut permettre de sélectionner un mode de pilotage automatique dit « mode palier », le mode palier étant mis en oeuvre par l'unité de traitement en générant des ordres de commande pour commander automatiquement une annulation d'une vitesse de déplacement de l'aéronef selon une direction verticale.

Dans un tel mode palier, l'unité de traitement peut également générer des ordres de commande variant en fonction d'autres paramètres tels que par exemple la vitesse de déplacement de l'aéronef.

Ainsi, lorsque la vitesse de déplacement est inférieure à un seuil de vitesse prédéterminé, le mode palier peut permettre au pilote de requérir une vitesse de déplacement verticale nulle de l'aéronef par rapport au sol.

Alternativement, lorsque la vitesse de déplacement est supérieure à ce seuil de vitesse prédéterminé, le mode palier peut permettre au pilote de requérir une pente nulle pour la trajectoire courante de déplacement de l'aéronef.

Selon un quatrième exemple, la consigne de commande de sélection générée par le au moins un interrupteur monostable peut permettre de sélectionner un mode de pilotage automatique dit « mode remise des gaz », le mode remise des gaz étant mis en oeuvre par l'unité de traitement en générant des ordres de commande pour commander automatiquement une interruption d'une phase d'atterrissage de l'aéronef.

Dans un tel mode remise des gaz, l'unité de traitement peut générer des ordres de commande pour commander automatiquement une manoeuvre d'évitement et éviter par exemple une collision avec un obstacle ou lors d'une approche manquée. L'aéronef peut alors reprendre automatiquement de l'altitude.

Selon un exemple de réalisation particulier de l'invention, le système de commande pouvant comporter un dispositif de pilotage automatique, la consigne de commande de sélection générée par le au moins un interrupteur monostable peut permettre de sélectionner un « mode de reprise en main », le mode de reprise en main étant mis en oeuvre par l'unité de traitement d'une part en désactivant le dispositif de pilotage automatique initialement activé pour piloter l'aéronef, et d'autre part en activant l'organe de commande pour piloter exclusivement l'aéronef selon les quatre axes de commande.

Ainsi, un tel mode de reprise en main peut être sélectionné par le pilote de l'aéronef en cas d'urgence lorsque par exemple le dispositif de pilotage automatique est défaillant ou lorsqu'un obstacle ou un autre aéronef est présent dans la trajectoire courante de l'aéronef. Une fois le mode de reprise en main sélectionné par le pilote, le dispositif de pilotage automatique n'est plus en mesure de piloter l'aéronef sauf si le pilote en refait la demande ultérieurement.

Selon un autre exemple de réalisation particulier de l'invention, le système de commande comportant un ensemble de plusieurs autres organes de commande, la consigne de commande de sélection générée par le au moins un interrupteur monostable peut permettre de sélectionner un « mode de reprise en main », le mode de reprise en main étant mis en oeuvre par l'unité de traitement d'une part en désactivant l'ensemble de plusieurs autres organes de commande initialement activés pour piloter l'aéronef, et d'autre part en activant l'organe de commande pour piloter exclusivement l'aéronef selon les quatre axes de commande.

En outre, un tel mode de reprise en main peut être sélectionné par le copilote de l'aéronef en cas d'urgence lorsque par exemple le pilote fait un malaise ou n'est plus capable de piloter l'aéronef. Une fois le mode de reprise en main sélectionné par le copilote, le pilote ne peut alors plus piloter l'aéronef.

Avantageusement, les plusieurs autres organes de commande peuvent comporter un manche destiné à être actionné par une première main d'un pilote en générant des consignes de commande de tangage et de roulis pour piloter l'aéronef selon d'une part l'axe de commande de tangage et d'autre part l'axe de commande de roulis, un levier destiné à être actionné par une seconde main d'un pilote en générant des consignes de commande de sustentation pour piloter l'aéronef selon l'axe de commande de sustentation et un palonnier destiné à être actionné par les pieds d'un pilote en générant des consignes de commande de mouvement de lacet pour piloter l'aéronef selon l'axe de commande de mouvement de lacet, le mode de reprise en main étant sélectionné par un copilote de l'aéronef.

Autrement dit, l'organe de commande selon l'invention permet d'équiper un poste de pilotage simplifié pour le copilote et peut être associé à un poste de pilotage plus conventionnel et plus complet pour le pilote.

Lorsque le mode de reprise en main n'est pas sélectionné, le copilote peut alors effectuer des fonctions de navigation de l'aéronef, de surveillance des paramètres de vol, de concertation avec le pilote ou de surveillance de l'environnement externe. Le copilote est cependant déchargé de la fonction de pilotage de l'aéronef.

La présente invention a aussi pour objet un aéronef qui est remarquable en ce qu'il comporte un système de commande précité.

L'aéronef selon l'invention est ainsi par exemple choisi parmi le groupe comportant les aéronefs à voilure fixe tels que les avions, les aéronefs à voilure tournante tels que les giravions présentant un ou plusieurs rotors de propulsion et/ou de sustentation.

Avantageusement, la seconde extrémité de la poignée peut être solidarisée à un support de l'aéronef, le support étant choisi parmi le groupe comportant des planches de bord, des sièges, des accoudoirs, des portes et des pylônes.

Dans ce cas, l'organe de commande est donc solidaire et immobile par rapport un organe du cockpit de l'aéronef tel une planche de bord, un siège, un accoudoir, une porte permettant au pilote d'accéder au cockpit depuis l'extérieur de l'aéronef ou encore un pylône solidarisé au plancher du cockpit.

L'invention et ses avantages apparaîtront avec plus de détails dans le cadre de la description qui suit avec des exemples donnés à titre illustratif en référence aux figures annexées qui représentent :
la figure 1, une vue de côté d'un premier exemple d'aéronef conforme à l'invention,
la figure 2, une vue de face d'une première variante de réalisation de l'invention,
la figure 3, une vue de face d'une deuxième variante de réalisation de l'invention, et
la figure 4, une vue perspective d'un second exemple d'aéronef conforme à l'invention.

Les éléments présents dans plusieurs figures distinctes sont affectés d'une seule et même référence.

Comme déjà évoqué, l'invention se rapporte donc au domaine des systèmes de commande d'aéronefs.

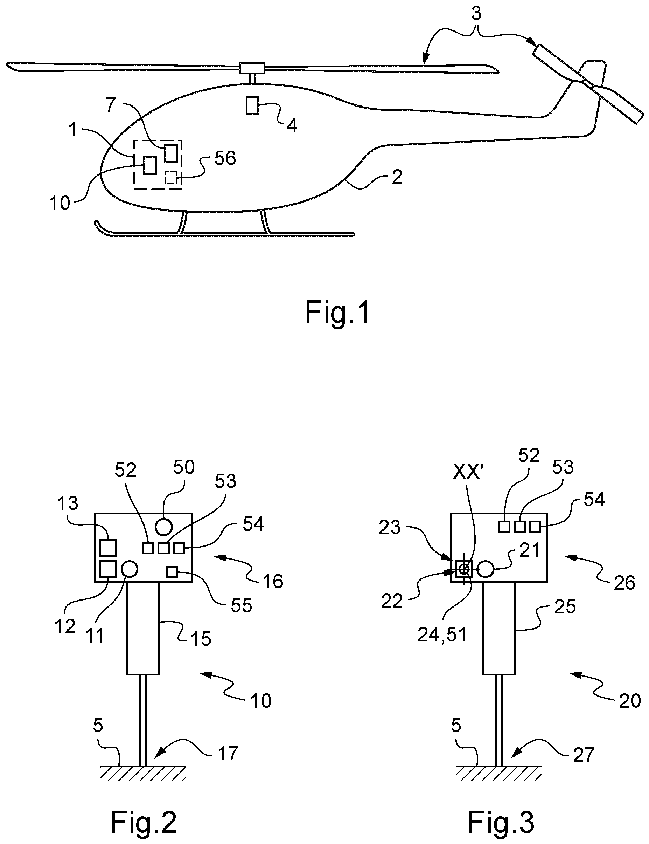

Tel que représenté à la figure 1, un aéronef 2 peut être piloté en manoeuvrant notamment des moyens aérodynamiques 3. Ces moyens aérodynamiques 3 peuvent par exemple comporter des pales de rotors lorsque l'aéronef 2 est à voilure tournante tel un giravion.

Un tel aéronef 2 est par ailleurs piloté au moyen d'un système de commande 1 comportant un organe de commande 10 générant des consignes de commande au moyen de signaux électriques ou optiques transmis à une unité de traitement 7.

L'unité de traitement 7 est quant à elle configurée pour générer des ordres de commande en fonction des consignes de commande reçues.

Un tel organe de commande 10 est ainsi désaccouplé mécaniquement de dispositifs de commande 4 configurés pour modifier une position des moyens aérodynamiques 3.

Ces dispositifs de commande 4 peuvent comporter par exemple des vérins, des moteurs ou des servocommandes. De tels dispositifs de commande 4 permettent alors à au moins un pilote de piloter l'aéronef 2 selon quatre axes de commande présentant un axe de commande de tangage, un axe de commande de roulis, un axe de commande de mouvement de lacet et un axe de commande de sustentation.

Un tel système de commande 1 comporte ainsi un unique organe de commande 10 configuré pour permettre à un pilote de piloter l'aéronef 2 selon les quatre axes de commande.

Tel que représenté à la figure 2, cet organe de commande 10 comporte une interface de commande multidirectionnelle 11 générant des consignes de commande transmises à l'unité de traitement 7. L'unité de traitement 7 génère alors les ordres de commande sous la dépendance des consignes de commandes et permet ainsi au pilote de piloter l'aéronef 2 selon un premier axe de commande et un deuxième axe de commande. Un tel premier axe de commande peut par exemple être l'axe de commande de tangage et le deuxième axe de commande peut être l'axe de commande de roulis.

En outre l'interface de commande multidirectionnelle 11 peut comporter une bille, une boule, une dalle ou un pavé tactile, une croix directionnelle, un stick analogique ou encore un bouton en forme de chapeau chinois.

Une telle interface de commande multidirectionnelle 11 peut dès lors être actionnée par la paume d'une main ou par un ou plusieurs doigts d'une main du pilote.

En outre, les ordres de commande générés par l'unité de traitement 7 peuvent varier en fonction d'autres paramètres tels que par exemple la vitesse de déplacement de l'aéronef 2.

Ainsi, lorsque la vitesse de déplacement est inférieure à un seuil de vitesse prédéterminé, l'interface de commande multidirectionnelle 11 et l'unité de traitement 7 peuvent permettre au pilote de modifier par exemple une référence ou un objectif de vitesse de déplacement par rapport au sol selon une direction longitudinale et une direction latérale. Alternativement, lorsque la vitesse de déplacement est supérieure à ce seuil de vitesse prédéterminé, l'interface de commande multidirectionnelle 11 et l'unité de traitement 7 peuvent permettre au pilote de modifier par exemple une référence ou un objectif de vitesse de déplacement de l'aéronef 2 par rapport à l'air.

L'organe de commande 10 comporte également un premier bouton de commande bidirectionnelle 12 actionnable par exemple vers un côté gauche et un côté droit pour piloter l'aéronef 2 selon un troisième axe de commande correspondant par exemple à l'axe de commande de mouvement de lacet. L'organe de commande 10 comporte également un second bouton de commande bidirectionnelle 13 actionnable par exemple vers un côté supérieur et un côté inférieur pour piloter l'aéronef 2 selon un quatrième axe de commande correspondant quant à lui par exemple à l'axe de commande de sustentation.

Tel que représenté selon une première variante de réalisation de l'invention illustrée sur la figure 2, le premier bouton de commande bidirectionnelle 12 et le second bouton de commande bidirectionnelle 13 peuvent être indépendants l'un de l'autre et comporter une molette, une croix directionnelle, un stick analogique ou encore un bouton en forme de chapeau chinois.

Cependant selon une seconde variante telle que représentée à la figure 3, le premier bouton de commande bidirectionnelle 22 et le second bouton de commande bidirectionnelle 23 peuvent avantageusement être regroupés et former un bouton de commande multidirectionnelle 24.

Dans ce cas, le bouton de commande multidirectionnelle 24 peut comporter, à l'instar d'une interface de commande multidirectionnelle 11, 21, une bille, une boule, une dalle ou un pavé tactile, une croix directionnelle, un stick analogique ou encore un bouton en forme de chapeau chinois.

En outre, le premier bouton de commande bidirectionnelle 12, 22 et le second bouton de commande bidirectionnelle 13, 23 permettent éventuellement, via l'unité de traitement 7, au pilote de commander l'aéronef 2 différemment en fonction d'autres paramètres tels que par exemple la vitesse de déplacement de l'aéronef 2.

Ainsi, lorsque la vitesse de déplacement de l'aéronef 2 est inférieure à un seuil de vitesse prédéterminé, le second bouton de commande bidirectionnelle 13, 23 peut permettre au pilote de modifier par exemple une référence ou un objectif de vitesse de déplacement selon la direction verticale du référentiel terrestre.

Alternativement, lorsque la vitesse de déplacement de l'aéronef 2 est supérieure à ce seuil de vitesse prédéterminé, le second bouton de commande bidirectionnelle 13, 23 et l'unité de traitement 7 peuvent permettre au pilote de modifier par exemple une référence ou un objectif de pente de la trajectoire courante de l'aéronef 2.

Par ailleurs, quelle que soit la vitesse de déplacement de l'aéronef 2, le premier bouton de commande bidirectionnelle 12, 22 et l'unité de traitement 7 peuvent permettre au pilote de modifier par exemple une référence de cap ou un objectif de vitesse angulaire en lacet de l'aéronef 2.

Par ailleurs, tel que représenté aux figures 2 à 3, l'organe de commande 10, 20 comporte une poignée 15, 25 configurée pour être saisie par une main d'un pilote ou d'un copilote. Dans ce cas, l'interface de commande multidirectionnelle 11, 21, le premier bouton de commande bidirectionnelle 12, 22 et le second bouton de commande bidirectionnelle 13, 23 sont alors agencés sur une première extrémité 16, 26 de la poignée 15, 25. L'interface de commande multidirectionnelle 11, 21, le premier bouton de commande bidirectionnelle 12, 22 et le second bouton de commande bidirectionnelle 13, 23 sont alors par exemple placés sur une face extérieure de la poignée 15, 25 de manière juxtaposée l'un à côté de l'autre et configurés par exemple pour être actionnés individuellement l'un après l'autre par un même doigt de la main du pilote ou copilote de l'aéronef 2 tenant la poignée, par exemple le pouce.

Alternativement, l'interface de commande multidirectionnelle 11, 21, le premier bouton de commande bidirectionnelle 12, 22 et le second bouton de commande bidirectionnelle 13, 23 peuvent également être placés sur la poignée 15, 25 de manière juxtaposée l'un à côté de l'autre et configurés pour être actionnés individuellement l'un après l'autre par deux doigts de la main du pilote ou copilote de l'aéronef 2 tenant la poignée, par exemple le pouce et l'index.

Par ailleurs, une telle poignée 15, 25 comporte également une seconde extrémité 17, 27 qui est solidarisée en liaison encastrement à zéro degré de liberté avec un support 5 de l'aéronef tel une planche de bord, un siège, un accoudoir, une porte ou encore un pylône solidarisé avec un plancher du cockpit de l'aéronef 2.

Par ailleurs, quelle soit la variante de réalisation de l'invention, l'organe de commande 10, 20 peut comporter un ou plusieurs interrupteurs monostables 50, 51, 52, 53, 54 permettant à un pilote ou un copilote par exemple d'actionner différents modes de pilotage automatique pour faciliter le pilotage de l'aéronef 2.

Ces interrupteurs monostables 50, 51, 52, 53, 54 sont en outre chacun actionnables entre une position de repos et une position activée générant une consigne de commande de sélection.

Ainsi, un tel interrupteur monostable 50, 51 peut permettre de générer une consigne de commande de sélection pour sélectionner un premier mode de pilotage automatique dit « mode approche ». Ce mode approche est mis en oeuvre par l'unité de traitement 7 en générant des ordres de commande pour piloter automatiquement l'aéronef 2 selon une trajectoire de descente prédéterminée vers une zone d'atterrissage.

En outre et en référence à la figure 3, lorsque le premier bouton de commande bidirectionnelle 22 et le second bouton de commande bidirectionnelle 23 forment un bouton de commande multidirectionnelle 24, l'interrupteur monostable 51 peut alors être également formé par le bouton de commande multidirectionnelle 24. Dans ce cas, l'interrupteur monostable 51 peut être actionné par le pilote ou le copilote en exerçant un effort de pression suivant une direction XX' selon laquelle s'étend une tige du bouton de commande multidirectionnelle 24.

Par ailleurs, la consigne de commande de sélection générée par l'interrupteur monostable 52 peut permettre de sélectionner un mode de pilotage automatique dit « mode stationnaire ». Un tel mode stationnaire est alors mis en oeuvre par l'unité de traitement 7 en générant des ordres de commande pour commander automatiquement une réduction de la vitesse de déplacement de l'aéronef 2, éventuellement jusqu'à une vitesse par rapport au sol sensiblement nulle.

En outre, la consigne de commande de sélection générée par l'interrupteur monostable 53 peut permettre de sélectionner un mode de pilotage automatique dit « mode palier ». Un tel mode palier est alors mis en oeuvre par l'unité de traitement 7 en générant des ordres de commande pour commander automatiquement une annulation d'une vitesse de déplacement de l'aéronef 2 selon une direction verticale.

De plus, la consigne de commande de sélection générée par l'interrupteur monostable 54 peut permettre de sélectionner un mode de pilotage automatique dit « mode remise des gaz ». Un tel mode remise des gaz est alors mis en oeuvre par l'unité de traitement 7 en générant des ordres de commande pour commander automatiquement une interruption d'une phase d'atterrissage de l'aéronef 2.

En outre tel que représenté à la figure 1, le système de commande 1 peut également comporter un dispositif de pilotage automatique 56 permettant de piloter un tel aéronef 2 sans action particulière d'un pilote pour générer des consignes de commande.

Dés lors, si un interrupteur monostable 55 est actionné par un pilote, il génère alors une consigne de commande de sélection pour sélectionner un « mode de reprise en main », ce mode de reprise en main étant mis en oeuvre par l'unité de traitement 7 d'une part en désactivant le dispositif de pilotage automatique 56 initialement activé pour piloter l'aéronef 2, et d'autre part en activant l'organe de commande 10 pour piloter exclusivement l'aéronef 2 selon les quatre axes de commande.

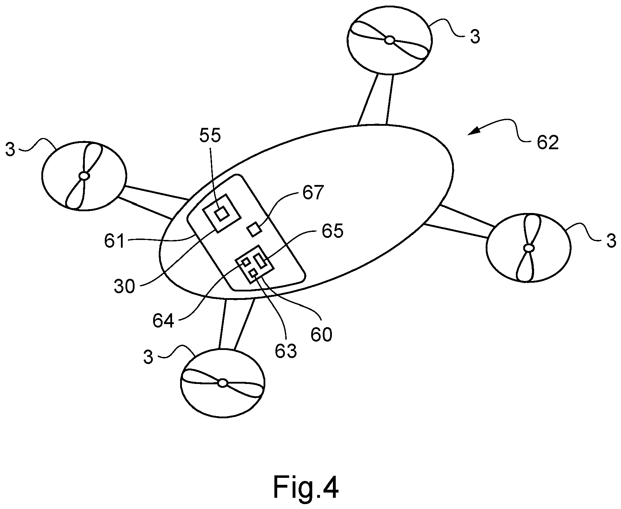

Tel que représenté à la figure 4, un système de commande 61 peut équiper un aéronef 62 comportant un ensemble 60 de plusieurs organes de commande 63-65. Dans ce cas, l'organe de commande 30 peut comporter un autre interrupteur monostable 55 générant une consigne de commande de sélection permettant à un copilote de sélectionner un « mode de reprise en main ».

Un tel mode de reprise en main est alors mis en oeuvre par l'unité de traitement 67 et permet ainsi à un copilote de l'aéronef 62 d'une part de désactiver l'ensemble des plusieurs autres organes de commande 63-65 initialement activés pour piloter l'aéronef 62, et d'autre part d'activer l'organe de commande 30 pour permettre au copilote de piloter exclusivement l'aéronef 62 selon les quatre axes de commande.

Dans ce cas, les autres organes de commande 63-65 peuvent comporter notamment un manche 63 destiné à être actionné par une première main d'un pilote en générant des consignes de commande de tangage et de roulis pour piloter l'aéronef 62 selon l'axe de commande de tangage et l'axe de commande de roulis.

Les autres organes de commande peuvent comporter également un levier 64 destiné à être actionné par une seconde main du pilote en générant des consignes de commande de sustentation pour piloter l'aéronef 62 selon l'axe de commande de sustentation et un palonnier 65 destiné à être actionné par les pieds du pilote en générant des consignes de commande de mouvement de lacet pour piloter l'aéronef 62 selon l'axe de commande de mouvement de lacet.

Un tel mode de reprise en main peut être actionné par le copilote de l'aéronef 62 en cas d'urgence si par exemple le pilote fait un malaise ou n'est plus capable de piloter l'aéronef 62. Le mode de reprise en main peut par ailleurs être associé à plusieurs lois de pilotage automatique de l'aéronef 62 pour par exemple piloter automatique un vol stationnaire, un ralentissement de la vitesse d'avancement, une annulation de la vitesse de déplacement verticale, une remise de gaz, etc...

En outre et tel que représenté sur la figure 4, l'aéronef 62 peut comporter plusieurs rotors 3 agencés par exemple de manière sensiblement coplanaire les uns à coté des autres. Différents bras permettent alors de porter les rotors 3 et de les agencer latéralement par rapport à un cockpit.

Bien entendu, le système de commande 61 illustré à la figure 4 peut également équiper l'aéronef 2 illustré sur la figure 1 et inversement que les deux variantes de réalisation de l'organe de commande 10, 20 illustrées aux figures 2 à 3 sont compatibles avec le système de commande 61.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Des variations peuvent être apportées sans s'écarter de l'invention, l'invention étant définie par les revendications annexées.

## Revendications

1. Système de commande (1, 61) pour un aéronef (2, 62), ledit système de commande (1, 61) étant configuré pour permettre à un pilote dudit aéronef (2, 62) de commander des moyens aérodynamiques (3) d'un aéronef (2, 62), ledit système de commande (1, 61) comportant une unité de traitement (7, 67) pour générer des ordres de commande, lesdits ordres de commande étant transmis à des dispositifs de commande (4) pour modifier une position desdits moyens aérodynamiques (3) et pour piloter ledit aéronef (2, 62) selon quatre axes de commande présentant un axe de commande de tangage, un axe de commande de roulis, un axe de commande de mouvement de lacet et un axe de commande de sustentation, ledit système de commande (1, 61) comportant un organe de commande (10, 20, 30) générant des consignes de commande, lesdites consignes de commande étant transmises à ladite unité de traitement (7, 67) générant lesdits ordres de commande sous la dépendance desdites consignes de commande, ledit organe de commande (10, 20, 30) étant désaccouplé mécaniquement desdits dispositifs de commande (4), ledit organe de commande (10, 20, 30) comportant au moins :
- une interface de commande multidirectionnelle (11, 21) générant des consignes de commande pour piloter ledit aéronef (2, 62) d'une part selon un premier axe de commande et d'autre part selon un deuxième axe de commande distinct dudit premier axe de commande, ledit premier axe de commande et ledit deuxième de commande étant choisis parmi lesdits quatre axes de commande,
- un premier bouton de commande bidirectionnelle (12, 22) générant des consignes de commande pour piloter ledit aéronef (2, 62) selon un troisième axe de commande distinct dudit premier axe de commande et dudit deuxième axe de commande, ledit troisième axe de commande étant choisi parmi lesdits quatre axes,
- un second bouton de commande bidirectionnelle (13, 23) générant des consignes de commande pour piloter ledit aéronef (2, 62) selon un quatrième axe de commande distinct dudit premier axe de commande, dudit deuxième axe de commande et dudit troisième axe de commande, ledit quatrième axe de commande étant choisi parmi lesdits quatre axes, et
- une poignée (15, 25) configurée pour être saisie par une main dudit pilote, ladite interface de commande multidirectionnelle (11, 21), ledit premier bouton de commande bidirectionnelle (12, 22) et ledit second bouton de commande bidirectionnelle (13, 23) étant agencés sur une première extrémité (16, 26) de ladite poignée (15, 25), ladite interface de commande multidirectionnelle (11, 21), ledit premier bouton de commande bidirectionnelle (12, 22) et ledit second bouton de commande bidirectionnelle (13, 23) étant configurés pour être actionnés par au moins un doigt de ladite main dudit pilote, ladite poignée (15, 25) comportant une seconde extrémité (17, 27) configurée pour être solidarisée selon une liaison de type encastrement à zéro degré de liberté avec un support (5) dudit aéronef (2, 62).

2. Système selon la revendication 1,
**caractérisé en ce que** ledit premier axe de commande est ledit axe de commande de tangage, ledit deuxième axe de commande est ledit axe de commande de roulis, ledit troisième axe de commande est ledit axe de commande de lacet et ledit quatrième axe de commande est ledit axe de commande de sustentation.

3. Système selon l'une quelconque des revendications 1 à 2,
**caractérisé en ce que** ledit premier bouton de commande bidirectionnelle (22) et ledit second bouton de commande bidirectionnelle (23) sont regroupés et forment un bouton de commande multidirectionnelle (24).

4. Système selon l'une quelconque des revendications 1 à 3,
**caractérisé en ce que** ledit organe de commande (10, 20, 30) comporte au moins un interrupteur monostable (50-55) actionnable entre une position de repos et une position activée générant une consigne de commande de sélection.

5. Système selon la revendication 4,
**caractérisé en ce que** ladite consigne de commande de sélection générée par ledit au moins un interrupteur monostable (50, 51) permet de sélectionner un mode de pilotage automatique dit « mode approche », ledit mode approche étant mis en oeuvre par ladite unité de traitement (7, 67) en générant des ordres de commande pour piloter automatiquement ledit aéronef (2, 62) selon une trajectoire de descente prédéterminée vers une zone d'atterrissage.

6. Système selon la revendication 5,
**caractérisé en ce que**, ledit premier bouton de commande bidirectionnelle (22) et ledit second bouton de commande bidirectionnelle (23) pouvant former un bouton de commande multidirectionnelle (24), ledit au moins un interrupteur monostable (51) est formé par ledit bouton de commande multidirectionnelle (24), ladite consigne de commande de sélection étant générée lorsque ledit pilote exerce un effort de pression sur ledit bouton de commande multidirectionnelle (24).

7. Système selon l'une quelconque des revendications 4 à 6,
**caractérisé en ce que** ladite consigne de commande de sélection générée par ledit au moins un interrupteur monostable (52) permet de sélectionner un mode de pilotage automatique dit « mode stationnaire », ledit mode stationnaire étant mis en oeuvre par ladite unité de traitement (7, 67) en générant des ordres de commande pour commander automatiquement une réduction de vitesse de déplacement dudit aéronef (2, 62).

8. Système selon l'une quelconque des revendications 4 à 7,
**caractérisé en ce que** ladite consigne de commande de sélection générée par ledit interrupteur monostable (53) permet de sélectionner un mode de pilotage automatique dit « mode palier », ledit mode palier étant mis en oeuvre par ladite unité de traitement (7 ,67) en générant des ordres de commande pour commander automatiquement une annulation d'une vitesse de déplacement dudit aéronef (2, 62) selon une direction verticale.

9. Système selon l'une quelconque des revendications 4 à 8,
**caractérisé en ce que** ladite consigne de commande de sélection générée par ledit au moins un interrupteur monostable (54) permet de sélectionner un mode de pilotage automatique dit « mode remise des gaz », ledit mode remise des gaz étant mis en oeuvre par ladite unité de traitement (7, 67) en générant des ordres de commande pour commander automatiquement une interruption d'une phase d'atterrissage dudit aéronef (2, 62).

10. Système selon l'une quelconque des revendications 4 à 9,
**caractérisé en ce que**, ledit système de commande (1) comportant un dispositif de pilotage automatique (56), ladite consigne de commande de sélection générée par ledit au moins un interrupteur monostable (55) permet de sélectionner un « mode de reprise en main », ledit mode de reprise en main étant mis en oeuvre par ladite unité de traitement (7) d'une part en désactivant ledit dispositif de pilotage automatique (56) initialement activé pour piloter ledit aéronef (2), et d'autre part en activant ledit organe de commande (10) pour piloter exclusivement ledit aéronef (2) selon lesdits quatre axes de commande.

11. Système selon l'une quelconque des revendications 4 à 10,
**caractérisé en ce que**, ledit système de commande (61) comportant un ensemble (60) de plusieurs autres organes de commande (63, 64, 65), ladite consigne de commande de sélection générée par ledit au moins un interrupteur monostable (55) permet de sélectionner un « mode de reprise en main », ledit mode de reprise en main étant mis en oeuvre par ladite unité de traitement (67) d'une part en désactivant ledit ensemble (60) de plusieurs autres organes de commande (63-65) initialement activés pour piloter ledit aéronef (62), et d'autre part en activant ledit organe de commande (30) pour piloter exclusivement ledit aéronef (62) selon lesdits quatre axes de commande.

12. Système selon la revendication 11,
**caractérisé en ce que** lesdits plusieurs autres organes de commande comportent un manche (63) destiné à être actionné par une première main d'un pilote en générant des consignes de commande de tangage et de roulis pour piloter ledit aéronef (62) selon d'une part ledit axe de commande de tangage et d'autre part ledit axe de commande de roulis, un levier (64) destiné à être actionné par une seconde main d'un pilote en générant des consignes de commande de sustentation pour piloter ledit aéronef (62) selon ledit axe de commande de sustentation et un palonnier (65) destiné à être actionné par les pieds d'un pilote en générant des consignes de commande de mouvement de lacet pour piloter ledit aéronef (62) selon ledit axe de commande de mouvement de lacet, ledit mode de reprise en main étant sélectionné par un copilote dudit aéronef (62).

13. Aéronef (2, 62)
**caractérisé en ce que** ledit aéronef (2, 62) comporte un système de commande (1, 61) selon l'une quelconque des revendications 1 à 12.

14. Aéronef (2, 62) selon la revendication 13,
**caractérisé en ce que** ladite seconde extrémité (17, 27) de ladite poignée (16, 26) est solidarisée à un support (5) dudit aéronef (2, 62), ledit support (5) étant choisi parmi le groupe comportant des planches de bord, des sièges, des accoudoirs, des portes et des pylônes.

## Patentansprüche

1. Steuersystem (1, 61) für ein Luftfahrzeug (2, 62), wobei das Steuersystem (1, 61) konfiguriert ist, um einen Piloten des Luftfahrzeugs (2, 62) in die Lage zu versetzen, aerodynamische Mittel (3) eines Luftfahrzeugs (2, 62) zu steuern, wobei das Steuersystem (1, 61) eine Verarbeitungseinheit (7, 67) zum Erzeugen von Steuerbefehlen umfasst, wobei die Steuerbefehle an Steuervorrichtungen (4) übertragen werden, um eine Position der aerodynamischen Mittel (3) zu ändern und das Luftfahrzeug (2, 62) um vier Steuerachsen zu steuern, die eine Nicksteuerachse, eine Rollsteuerachse, eine Giersteuerachse und eine Auftriebssteuerachse umfassen, wobei das Steuersystem (1, 61) ein Steuerorgan (10, 20, 30) umfasst, das Steuervorgaben erzeugt, wobei die Steuervorgaben an die Verarbeitungseinheit (7, 67) übertragen werden, die in Abhängigkeit von den Steuervorgaben die Steuerbefehle erzeugt, wobei das Steuerorgan (10, 20, 30) von den Steuervorrichtungen (4) mechanisch entkoppelt ist,
wobei das Steuerorgan (10, 20, 30) mindestens:
- eine multidirektionale Steuerschnittstelle (11, 21), die Steuervorgaben erzeugt, um das Luftfahrzeug (2, 62) einerseits um eine erste Steuerachse und andererseits um eine von der ersten Steuerachse verschiedene zweite Steuerachse zu steuern, wobei die erste Steuerachse und die zweite Steuerachse unter den vier Steuerachsen ausgewählt sind,
- einen ersten bidirektionalen Steuerknopf (12, 22), der Steuervorgaben zum Steuern des Luftfahrzeugs (2, 62) um eine dritte Steuerachse erzeugt, die von der ersten Steuerachse und der zweiten Steuerachse verschieden ist, wobei die dritte Steuerachse unter den vier Achsen ausgewählt ist,
- einen zweiten bidirektionalen Steuerknopf (13, 23), der Steuervorgaben zum Steuern des Luftfahrzeugs (2, 62) um eine vierte Steuerachse erzeugt, die von der ersten Steuerachse, der zweiten Steuerachse und der dritten Steuerachse verschieden ist, wobei die vierte Steuerachse unter den vier Achsen ausgewählt ist, und
- einen Griff (15, 25), der konfiguriert ist, um von einer Hand des Piloten ergriffen zu werden, wobei die multidirektionale Steuerschnittstelle (11, 21), der erste bidirektionale Steuerknopf (12, 22) und der zweite bidirektionale Steuerknopf (13, 23) an einem ersten Ende (16, 26) des Griffs (15, 25) angeordnet sind, wobei die multidirektionale Steuerschnittstelle (11, 21), der erste bidirektionale Steuerknopf (12, 22) und der zweite bidirektionale Steuerknopf (13, 23) konfiguriert sind, um durch mindestens einen Finger der Hand des Piloten betätigt zu werden, wobei der Griff (15, 25) ein zweites Ende (17, 27) aufweist, das konfiguriert ist, um gemäß einer Verbindung vom Typ Einpassung mit null Freiheitsgraden mit einem Träger (5) des Luftfahrzeugs (2, 62) fest verbunden zu sein.

2. System nach Anspruch 1,
**dadurch gekennzeichnet, dass** die erste Steuerachse die Nick-Steuerachse ist, die zweite Steuerachse die Roll-Steuerachse ist, die dritte Steuerachse die Gier-Steuerachse ist und die vierte Steuerachse die Auftriebs-Steuerachse ist.

3. System nach einem der Ansprüche 1 bis 2,
**dadurch gekennzeichnet, dass** der erste bidirektionale Steuerknopf (22) und der zweite bidirektionale Steuerknopf (23) zusammengefasst sind und einen multidirektionalen Steuerknopf (24) bilden.

4. System nach einem der Ansprüche 1 bis 3,
**dadurch gekennzeichnet, dass** das Steuerorgan (10, 20, 30) mindestens einen monostabilen Schalter (50-55) umfasst, der zwischen einer Ruhestellung und einer aktivierten Stellung betätigbar ist, die eine Auswahlsteuerungsvorgabe erzeugt.

5. System nach Anspruch 4,
**dadurch gekennzeichnet, dass** die von dem mindestens einen monostabilen Schalter (50, 51) erzeugte Auswahlsteuerungsvorgabe die Auswahl eines als "Anflugmodus" bezeichneten automatischen Steuerungsmodus ermöglicht, wobei der Anflugmodus von der Verarbeitungseinheit (7, 67) umgesetzt wird, indem Steuerbefehle erzeugt werden, um das Luftfahrzeug (2, 62) automatisch entlang einer vorgegebenen Sinkflugbahn zu einer Landezone zu steuern.

6. System nach Anspruch 5,
**dadurch gekennzeichnet, dass**, da der erste bidirektionale Steuerknopf (22) und der zweite bidirektionale Steuerknopf (23) einen multidirektionalen Steuerknopf (24) bilden können, der mindestens eine monostabile Schalter (51) durch den multidirektionalen Steuerknopf (24) gebildet ist, und dass die Auswahlsteuerungsvorgabe erzeugt wird, wenn der Pilot eine Druckkraft auf den multidirektionalen Steuerknopf (24) ausübt.

7. System nach einem der Ansprüche 4 bis 6,
**dadurch gekennzeichnet, dass** die von dem mindestens einen monostabilen Schalter (52) erzeugte Auswahlsteuerungsvorgabe die Auswahl eines als "stationärer Modus" bezeichneten automatischen Steuerungsmodus ermöglicht, wobei der stationäre Modus von der Verarbeitungseinheit (7, 67) durch die Erzeugung von Steuerbefehlen Steuerbefehle zum automatischen Steuern einer Verringerung der Bewegungsgeschwindigkeit des Luftfahrzeugs (2, 62) umgesetzt wird.

8. System nach einem der Ansprüche 4 bis 7,
**dadurch gekennzeichnet, dass** die von dem monostabilen Schalter (53) erzeugte Auswahlsteuerungsvorgabe die Auswahl eines als "Stufenmodus" bezeichneten automatischen Steuerungsmodus ermöglicht, wobei der Stufenmodus von der Verarbeitungseinheit (7 ,67) umgesetzt wird, indem Steuerbefehle zum automatischen Steuern einer Aufhebung einer Bewegungsgeschwindigkeit des Luftfahrzeugs (2, 62) in einer vertikalen Richtung erzeugt werden.

9. System nach einem der Ansprüche 4 bis 8,
**dadurch gekennzeichnet, dass** die von dem mindestens einen monostabilen Schalter (54) erzeugte Auswahlsteuerungsvorgabe die Auswahl eines als "Durchstartmodus" bezeichneten automatischen Steuerungsmodus ermöglicht, wobei der Durchstartmodus von der Verarbeitungseinheit (7, 67) umgesetzt wird, indem Steuerbefehle zum automatischen Steuern einer Unterbrechung einer Landephase des Luftfahrzeugs (2, 62) erzeugt werden.

10. System nach einem der Ansprüche 4 bis 9,
**dadurch gekennzeichnet, dass** das Steuersystem (1) eine automatische Steuervorrichtung (56) umfasst, und dass die von dem mindestens einen monostabilen Schalter (55) erzeugte Auswahlsteuerungsvorgabe die Auswahl eines "Wiederaufnahmemodus " ermöglicht, wobei der Wiederaufnahmemodus von der Verarbeitungseinheit (7) umgesetzt wird, indem einerseits die ursprünglich zur Steuerung des Luftfahrzeugs (2) aktivierte automatische Steuervorrichtung (56) deaktiviert wird und andererseits das Steuerorgan (10) aktiviert wird, um allein das Luftfahrzeug (2) um die vier Steuerachsen zu steuern.

11. System nach einem der Ansprüche 4 bis 10,
**dadurch gekennzeichnet, dass** das Steuersystem (61) eine Baugruppe (60) aus mehreren anderen Steuerorganen (63, 64, 65) umfasst, und dass die von dem mindestens einen monostabilen Schalter (55) erzeugte Auswahlsteuerungsvorgabe die Auswahl eines " Wiederaufnahmemodus" ermöglicht, wobei der Wiederaufnahmemodus von der Verarbeitungseinheit (67) umgesetzt wird, indem einerseits die Gesamtheit (60) mehrerer anderer Steuerorgane (63-65), die ursprünglich aktiviert wurden, um das Luftfahrzeug (62) zu steuern, deaktiviert wird und andererseits das Steuerorgan (30) aktiviert wird, um allein das Luftfahrzeug (62) um die vier Steuerachsen zu steuern.

12. System nach Anspruch 11,
**dadurch gekennzeichnet, dass** die mehreren anderen Steuerorgane einen Steuerknüppel (63), der dazu bestimmt ist, von einer ersten Hand eines Piloten betätigt zu werden und dabei Nick- und Rollsteuerungsvorgaben zu erzeugen, um das Luftfahrzeug (62) einerseits um die Nicksteuerachse und andererseits um die Rollsteuerachse zu steuern, einen Hebel (64), der dazu bestimmt ist, von einer zweiten Hand eines Piloten betätigt zu werden und dabei Auftriebssteuerbefehle zu erzeugen, um das Luftfahrzeug (62) um die Auftriebssteuerachse zu steuern, und ein Seitenruder (65) umfassen, das dazu bestimmt ist, von den Füßen eines Piloten betätigt zu werden und dabei Giersteuerbefehle zu erzeugen, um das Luftfahrzeug (62) entlang der Giersteuerachse zu steuern, und dass der Wiederaufnahmemodus von einem Kopiloten des Luftfahrzeugs (62) ausgewählt wird.

13. Luftfahrzeug (2, 62),
**dadurch gekennzeichnet, dass** das Luftfahrzeug (2, 62) ein Steuersystem (1, 61) nach einem der Ansprüche 1 bis 12 aufweist.

14. Luftfahrzeug (2, 62) nach Anspruch 13,
**dadurch gekennzeichnet, dass** das zweite Ende (17, 27) des Griffs (16, 26) fest mit einer Halterung (5) des Luftfahrzeugs (2, 62) verbunden ist, wobei die Halterung (5) aus der Gruppe ausgewählt ist, die aus Instrumentenbrettern, Sitzen, Armlehnen, Türen und Pylonen besteht.

## Claims

1. Control system (1, 61) for an aircraft (2, 62), said control system (1, 61) being configured to allow a pilot of said aircraft (2, 62) to control aerodynamic means (3) of an aircraft (2, 62), said control system (1, 61) having a processing unit (7, 67) for generating control commands, said control commands being transmitted to control devices (4) to modify a position of said aerodynamic means (3) and to pilot said aircraft (2, 62) according to four control axes having a pitch control axis, a roll control axis, a yaw movement control axis and a lift control axis, said control system (1, 61) having a control member (10, 20, 30) generating control setpoints, said control setpoints being transmitted to said processing unit (7, 67) generating said control commands under the dependency of said control setpoints, said control member (10, 20, 30) being disconnected mechanically from said control devices (4), said control member (10, 20, 30) having at least:
- one multidirectional control interface (11, 21) generating control setpoints for piloting said aircraft (2, 62) on the one hand according to a first control axis and on the other hand according to a second control axis distinct from said first control axis, said first control axis and said second control axis being chosen from among said four control axes,
- a first bidirectional control button (12, 22) generating control setpoints for piloting said aircraft (2, 62) according to a third control axis distinct from said first control axis and from said second control axis, said third control axis being chosen from among said four axes,
- a second bidirectional control button (13, 23) generating control setpoints for piloting said aircraft (2, 62) according to a fourth control axis distinct from said first control axis, from said second control axis and from said third control axis, said fourth control axis being chosen from among said four axes, and
- a handle (15, 25) configured to be gripped by a hand of said pilot, said multidirectional control interface (11, 21), said first bidirectional control button (12, 22) and said second bidirectional control button (13, 23) being arranged on a first end (16, 26) of said handle (15, 25), said multidirectional control interface (11, 21), said first bidirectional control button (12, 22) and said second bidirectional control button (13, 23) being configured to be actuated by at least one finger of said hand of said pilot, said handle (15, 25) having a second end (17, 27) configured to be secured by a flush-mounting link with zero degree of freedom with a support (5) of said aircraft (2, 62).

2. System according to claim 1,
**characterised in that** said first control axis is said pitch control axis, said second control axis is said roll control axis, said third control axis is said yaw control axis and said fourth control axis is said lift control axis.

3. System according to any one of claims 1 to 2,
**characterised in that** said first bidirectional control button (22) and said second bidirectional control button (23) are grouped together and form one multidirectional control button (24).

4. System according to any one of claims 1 to 3,
**characterised in that** said control member (10, 20, 30) has at least one monostable switch (50-55) capable of being actuated between an idle position and an activated position generating a selection control setpoint.

5. System according to claim 4,
**characterised in that** said selection control setpoint generated by said at least one monostable switch (50, 51) makes it possible to select an automatic piloting mode called "approach mode", said approach mode being implemented by said processing unit (7, 67) by generating control commands to pilot said aircraft (2, 62), automatically, according to a predetermined descent trajectory towards a landing zone.

6. System according to claim 5,
**characterised in that** said first bidirectional control button (22) and said second bidirectional control button (23) being able to form a multidirectional control button (24), said at least one monostable switch (51) is formed by said multidirectional control button (24), said selection control setpoint being generated when said pilot exerts a pressure force on said multidirectional control button (24).

7. System according to any one of claims 4 to 6,
**characterised in that** said selection control setpoint generated by said at least one monostable switch (52) makes it possible to select an automatic piloting mode called "stationary mode", said stationary mode being implemented by said processing unit (7, 67) by generating control commands to command, automatically, a reduction of speed of movement of said aircraft (2, 62).

8. System according to any one of claims 4 to 7,
**characterised in that** said selection control setpoint generated by said monostable switch (53) makes it possible to select an automatic piloting mode called "level mode", said level mode being implemented by said processing unit (7,67) by generating control commands to command, automatically, a cancellation of a speed of movement of said aircraft (2, 62) in a vertical direction.

9. System according to any one of claims 4 to 8,
**characterised in that** said selection control setpoint generated by said at least one monostable switch (54) makes it possible to select an automatic piloting mode called "go-around mode", said go-around mode being implemented by said processing unit (7, 67) by generating control commands to command, automatically, an interruption of a landing phase of said aircraft (2, 62).

10. System according to any one of claims 4 to 9,
**characterised in that** said control system (1) having an automatic piloting device (56), said selection control setpoint generated by said at least one monostable switch (55) makes it possible to select a "revert to manual piloting mode", said revert to manual piloting mode being implemented by said processing unit (7) on the one hand by deactivating said automatic piloting device (56) initially activated to pilot said aircraft (2), and on the other hand by activating said control member (10) to pilot said aircraft (2) exclusively according to said four control axes.

11. System according to any one of claims 4 to 10,
**characterised in that** said control system (61) having a set (60) of several other control members (63, 64, 65), said selection control setpoint generated by said at least one monostable switch (55) makes it possible to select a "revert to manual piloting mode", said revert to manual piloting mode being implemented by said processing unit (67) on the one hand by deactivating said set (60) of several other control members (63-65) initially activated to pilot said aircraft (62), and on the other hand by activating said control member (30) to pilot said aircraft (62) exclusively according to said four control axes.

12. System according to claim 11,
**characterised in that** said several other control members has a control column (63) intended to be actuated by a first hand of a pilot by generating pitch and roll control setpoints to pilot said aircraft (62) according, on the one hand, to said pitch control axis and, on the other hand, to said roll control axis, a lever (64) intended to be actuated by a second hand of a pilot by generating lift control setpoints to pilot said aircraft (62) according to said lift control axis and a rudder bar (65) intended to be actuated by the feet of a pilot by generating yaw movement control setpoints to pilot said aircraft (62) according to said yaw movement control axis, said revert to manual piloting mode being selected by a co-pilot of said aircraft (62).

13. Aircraft (2, 62)
**characterised in that** said aircraft (2, 62) has a control system (1, 61) according to any one of claims 1 to 12.

14. Aircraft (2, 62) according to claim 13,
**characterised in that** said second end (17, 27) of said handle (16, 26) is secured to a support (5) of said aircraft (2, 62), said support (5) being chosen from among the group having instrument panels, seats, arm rests, doors and pylons.
